Europäisches Patentamt

European Patent Office

Office européen des brevets

(11) Veröffentlichungsnummer: **0 049 827**
**B1**

# (12) EUROPÄISCHE PATENTSCHRIFT

(45) Veröffentlichungstag der Patentschrift:
12.09.84

(51) Int. Cl.³: **C 01 G 56/00,** G 21 C 19/46,
B 01 F 1/00

(21) Anmeldenummer: **81107823.7**

(22) Anmeldetag: **01.10.81**

(54) **Verfahren zum Auflösen schwerlöslicher Plutoniumoxide.**

(30) Priorität: **14.10.80 DE 3038807**

(43) Veröffentlichungstag der Anmeldung:
**21.04.82 Patentblatt 82/16**

(45) Bekanntmachung des Hinweises auf die Patenterteilung:
**12.09.84 Patentblatt 84/37**

(84) Benannte Vertragsstaaten:
**BE DE FR GB IT**

(56) Entgegenhaltungen:
**FR - A - 2 456 545**

**INDUSTRIAL & ENGINEERING CHEMISTRY, PROCESS DESIGN AND DEVELOPMENT, Band 5, Nr. 3, Juli 1966, Hugh. M. Hulburt, WASHINGTON D.C. (US) P.A. HAAS et al.: "Dissolution of graphite-base reactor fuels by pressurized aqueous processes", Seiten 234-238 CHEMICAL ABSTRACTS, Band 90, Nr. 18, 30. April 1979, Seite 367, Zusammenfassung 143404d, COLUMBUS, OHIO (US)**

(73) Patentinhaber: **ALKEM GMBH, Postfach 110069,
D-6450 Hanau 11 (DE)**

(72) Erfinder: **Ledebrink, Friedrich-Wilhelm, Dr.,
Dörnigheimer Weg 32, D-6457 Maintal 2 (DE)**
Erfinder: **Rosenkranz, Wolfgang, Kachelberg 1,
D-6331 Waldsolms (DE)**
Erfinder: **Stoll, Wolfgang, Dr., Ameliastrasse 25,
D-6450 Hanau (DE)**

(74) Vertreter: **Mehl, Ernst, Dipl.-Ing. et al, Postfach 22 01 76,
D-8000 München 22 (DE)**

**Beschreibung**

Die Erfindung betrifft ein Verfahren zum Auflösen schwerlöslicher Plutoniumoxide, insbesondere $PuO_2$ oder $(U/Pu)O_2$-Mischoxide.

Ein derartiges Verfahren ist aus der deutschen Offenlegungsschrift 2 619 089 bekannt, nach der Plutoniumdioxid $PuO_2$ in einem siedenden Gemisch aus konzentrierter Salpetersäure $HNO_3$ und Flusssäure HF aufgelöst wird. Die Auflösungsraten nehmen mit steigender Konzentration der Flusssäure HF zu. Die Auflösung erfolgt beispielsweise in Lösegefässen aus Polytetrafluoräthylen.

Dieses Gemisch aus konzentrierter Salpetersäure und Flusssäure greift mit steigendem Flusssäuregehalt nicht nur das Plutoniumdioxid, sondern auch die Wände des Lösegefässes an. Werden Lösegefässe aus Metall eingesetzt, so machen sich zusätzlich aus Korrosionsprodukten bestehende Verunreinigungen bei der Weiterverarbeitung der Plutoniumlösung nachteilig bemerkbar. Ferner müssen vor der Weiterverarbeitung der Plutoniumlösung die zugesetzten Fluoride wieder in einem zusätzlichen Verfahrensgang abgetrennt werden, da sie nicht nur die Verarbeitungsanlagen korrosiv belasten, sondern auch chemische Nachfolgeprozesse behindern. Ganz schwierig ist es hierbei, das Fluorid in Plutoniumkomplexverbindungen abzutrennen.

Der Erfindung liegt die Aufgabe zugrunde, ein Lösungsverfahren für Plutoniumoxide anzugeben, das ohne Flusssäure als Komponente im Lösungsmittel auskommt, so dass die genannten Schwierigkeiten vermieden werden.

Zur Lösung dieser Aufgabe ist ein Verfahren der eingangs erwähnten Art erfindungsgemäss dadurch gekennzeichnet, dass die Oxide innerhalb eines gasdicht verschlossenen Gefässes (Autoklaven) in fluoridfreier Salpetersäure ($HNO_3$) erhitzt werden.

Es kann reine wässrige Salpetersäure verwendet werden, die insbesondere keinen das Lösegefäss angreifenden Flusssäurezusatz enthält und die damit fluoridfrei ist. Diese Salpetersäure kann wegen des gasdichten Abschlusses im Druck- und Lösegefäss (Autoklaven) auf eine höhere Temperatur als ihre Siedetemperatur bei Normaldruck (Atmosphärendruck) unter Ausbildung eines überhöhten Druckes im Druck- und Lösegefäss erhitzt werden, wodurch die Lösungsrate für die Oxide beschleunigt wird.

Die Oxide und die Salpetersäure werden günstigerweise auf eine Temperatur von mindestens 120°C erhitzt, vorteilhafterweise auf eine Temperatur im Bereich von 120°C bis 300°C. Vorzugsweise werden die Oxide und die Salpetersäure auf eine Temperatur im Bereich von 200°C bis 300°C erhitzt.

Günstigerweise werden die Oxide in konzentrierter fluoridfreier Salpetersäure erhitzt, da hierdurch besonders hohe Lösungsraten erzielt werden.

Aus «Industrial and Engineering Chemistry, Process Design and Development», Band 5, Nr. 3, Juli 1966, Seiten 234-238, ist zwar bekannt, $ThO_2$ unter Druck in Salpetersäure aufzulösen. Dieses $ThO_2$ konnte jedoch in 24 Stunden nur bis zu höchstens 49%, also nur schlecht gelöst werden.

Die Erfindung und ihre Vorteile seien anhand der Zeichnung an Ausführungsbeispielen näher erläutert:

Fig. 1 zeigt als Diagramm die Auslösungsrade zu einem Ausführungsbeispiel der Erfindung.

Fig. 2 zeigt schematisch eine Auflöseeinrichtung für ein zweites Ausführungsbeispiel der Erfindung.

In einem Druck- und Lösegefäss (Autoklaven) befinden sich 30 ml reiner fluoridfreier konzentrischer Salpetersäure, zu der 4 Gramm Plutoniumdioxid $PuO_2$ hinzugegeben werden. Sodann wird das Druck- und Lösegefäss (Autoklav) gasdicht verschlossen und die elektrische Autoklavenbeheizung eingeschaltet. Ein Temperaturregler am Autoklaven hält über einen Zeitraum von 20 Stunden eine Temperatur der konzentrierten Salpetersäure im Druck- und Lösegefäss von 220°C aufrecht, so dass sich ein Dampfdruck der Salpetersäure im Druck- und Lösegefäss von 20 bar einstellt.

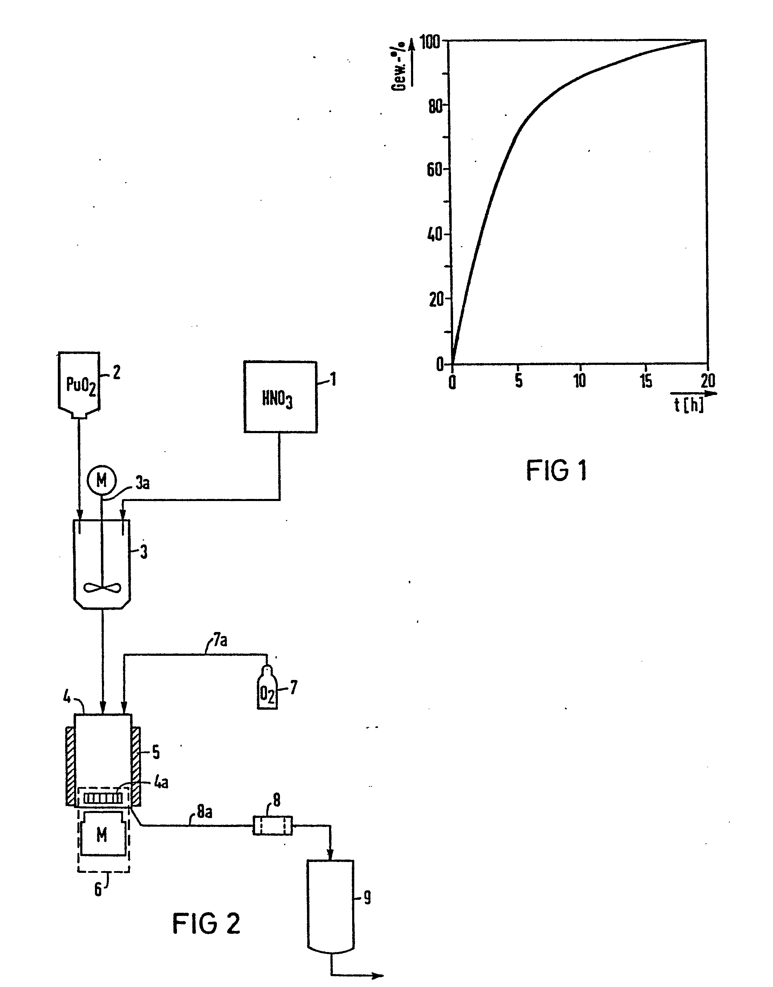

Wie das Diagramm nach Fig. 1 zeigt, in dem die gelöste $PuO_2$-Menge in Gewichtsprozent über der Lösezeit in Stunden aufgetragen ist, wird während dieses Zeitraumes von 20 Stunden das eingesetzte Plutoniumdioxid vollständig aufgelöst. Nach 10 Stunden Lösezeit sind bereits ca. 90% der eingesetzten Menge Plutoniumdioxid in Lösung gegangen.

In Fig. 2 ist eine Einrichtung zum Lösen einer grösseren Menge Plutoniumdioxid nach einem Verfahren gemäss der Erfindung schematisch dargestellt. Die Einrichtung nach Fig. 2 weist einen Salpetersäurevorlagebehälter 1 und einen Vorlagebehälter 2 für Plutoniumdioxidpulver auf. Beide Behälter 1 und 2 sind mit Rohrleitungen zu einem Suspensionsbehälter 3 versehen, in dem ein elektrisches Rührwerk 3a angeordnet ist. Der Suspensionsbehälter 3 ist mit einer Zuführungsleitung zu einem etwa 5 Liter fassenden Druck- und Lösegefäss (Autoklaven) 4 versehen. Am Autoklaven 4 ist ein elektrischer Beheizungsmantel 5 angebracht und eine elektrische Rührvorrichtung 6. Diese Rührvorrichtung 6 weist einen ausserhalb des Druck- und Lösegefässes (Autoklaven) 4 angebrachten, drehbaren Magneten auf, der von einem Elektromotor angetrieben wird. Im Druck- und Lösegefäss (Autoklaven) 4 befindet sich ein Rührer 4a mit einem magnetischen Körper, der mit einem gegen Salpetersäure unempfindlichen Überzug, z.B. Polytetrafluoräthylen, versehen ist. Der ausserhalb des Autoklaven befindliche drehbare Magnet nimmt den Magnetkörper im Rührer 4a mit, so dass dieser ohne eine mechanische Welle angetrieben wird.

Dem Autoklaven 4 ist ferner eine mit Sauerstoff gefüllte Druckflasche 7 zugeordnet, aus der über eine Zuleitung 7a Sauerstoffgas in das Druck- und Lösegefäss (Autoklaven) 4 eingeleitet werden kann.

Der Autoklav 4 weist weiterhin eine Rohrleitung 8a zum Ableiten der Lösung aus dem Druck- und Lösegefäss auf. Diese Rohrleitung 8a führt über ein Filter 8 in einen Vorratsbehälter 9 für die Lösung.

Am Autoklaven 4 sind ferner noch nichtdargestellte Messeinrichtungen für Druck und Temperatur, eine nichtdargestellte Regeleinrichtung für die Temperatur sowie Absperrhähne für die Rohrleitungen und ein Überdruckventil angebracht.

Aus dem Salpetersäurevorlagebehälter 1 werden zunächst 4 Liter reiner 14,5 molarer wässriger fluoridfreier Salpetersäure in den Suspensionsbehälter 3 vorgelegt.

Nach dem Einschalten des Rührwerkes 3a werden 1 kg Plutoniumdioxid $PuO_2$ in Pulverform aus dem Vorlagebehälter 2 in den Suspensionsbehälter 3 allmählich eingebracht. Sodann wird die Suspension aus dem Suspensionsbehälter 3 in das 5 Liter fassende Druck- und Lösegefäss (Autoklaven) 4 abgelassen.

Sodann wird über die Rohrleitung 7a das Druck- und Lösegefäss (Autoklav) 4 zunächst mit reinem Sauerstoff aus der Druckflasche 7 gespült. Anschliessend wird dieses Druck- und Lösegefäss gasdicht verschlossen und in vorteilhafter Weise mit einer Sauerstoffatmosphäre von einem Druck von 21 bar aus der Druckflasche 7 beaufschlagt und dann der Absperrhahn in der Rohrleitung 7a verschlossen.

Anschliessend werden die Rührvorrichtung 6 und der Beheizungsmantel 5 eingeschaltet. Die Rührvorrichtung 6 verhindert ein Sedimentieren des Plutoniumdioxidpulvers während des Lösevorgangs im Druck- und Lösegefäss (Autoklaven) 4.

Die Salpetersäure im Druck- und Lösegefäss (Autoklaven) 4 wird auf 220°C aufgeheizt. Diese Temperatur wird mit Hilfe des Temperaturreglers 20 Stunden lang konstant gehalten. Bei dieser Temperatur stellt sich zunächst ein Druck von 64 bar im Druck- und Lösegefäss 4 ein.

Durch die Sauerstoffatmosphäre im Druck- und Lösegefäss (Autoklaven) 4 wird günstigerweise parallel zur Auflösung des Plutoniumdioxids das vierwertige Plutonium Pu (IV) zu sechswertigem Plutonium Pu (VI) nach der Bruttoreaktionsgleichung

$$3\ PuO_2 + 6\ HNO_3 + 1,5\ O_2 \rightarrow$$
$$\rightarrow 3\ [PuO_2]\ (NO_3)_2 + 3\ H_2O\ (A)$$

oxidiert.

Intermediär werden während dieser Oxidation des Plutoniums Nitrosegase gebildet, die jedoch bei dem herrschenden, gegenüber dem Atmosphärendruck erhöhten Druck sofort mit Sauerstoff zu $NHO_3$ nach den folgenden Reaktionsgleichungen aufoxidiert werden:

$$3\ PuO_2 + 10\ HNO_3 \rightarrow [PuO_2]$$
$$(NO_3)_3 + 5\ H_2O + 3\ NO_2 + NO$$
$$3\ NO_2 + NO + 1,5\ O_2 + 2\ H_2O \rightarrow 4\ HNO_3.$$

Während dieser Reaktion wird Sauerstoff verbraucht, so dass es im gasdicht verschlossenen Druck- und Lösegefäss (Autoklaven) 4 nach 20 Stunden schliesslich zu einem Druckabfall auf etwa 20 bar nach vollständiger Oxidation des eingesetzten Plutoniums kommt.

In günstiger Weise kann zur Durchführung dieser Reaktion das Druck- und Lösegefäss (Autoklav) 4 auch mit Ozon oder mit einem Gemisch aus Sauerstoff und Ozon ausgefüllt sein. Diese Gase haben günstigerweise einen Druck höher als den Normaldruck (Atmosphärendruck). Vorteilhafterweise sollte die Gasfüllung im Druck- und Lösegefäss 4 mehr Sauerstoff und/oder Ozon als die atmosphärische Luft enthalten.

Nach Ablauf der Lösezeit wird das Druck- und Lösegefäss (Autoklav) 4 druckentlastet und die in diesem Druck- und Lösegefäss 4 befindliche Plutonyl-Nitratlösung über die Rohrleitung 8a durch den Filter 8 hindurch in den Vorratsbehälter 9 überführt. Die Plutonyl-Nitralösung aus dem Vorratsbehälter 9 kann beispielsweise entsprechend der deutschen Offenlegungsschrift 2 811 949 mit einer Uranyl-Nitratlösung vermischt und anschliessend in eine 20%ige Ammoniumkarbonat-Lösung eingegeben werden, um ein Ammonium-Uranyl-Plutonyl-Karbonat-Mischkristall auszufällen, das sich günstigerweise zu gesinterten Kernbrennstoffkörpern für Kernreaktor-Brennelemente verarbeiten lässt.

Da sich im Laufe der Zeit das chemische Gleichgewicht der Plutonyl-Nitratlösung im Vorratsbehälter 9 wieder zugunsten der linken Seite der Bruttoreaktionsgleichung (A) verschiebt, ist es günstig, wenn eine längere Zeit aufbewahrte Plutonyl-Nitratlösung vor der Weiterverarbeitung nochmals in einem Druck- und Lösegefäss (Autoklaven) unter gasdichtem Abschluss, vorzugsweise in einer Sauerstoff- und/oder Ozonatmosphäre bei höherem Druck als Normaldruck (Atmosphärendruck) unter Erhitzen auf eine Temperatur gleich der oder höher als die Siedetemperatur der Salpetersäure bei Normaldruck (Atmosphärendruck) nachoxidiert wird, um das chemische Gleichgewicht wieder zugunsten der rechten Seite der Bruttoreaktionsgleichung (A) zu verschieben und die Weiterverarbeitung der Lösung beispielsweise zu Ammonium-Uranyl-Plutonyl-Karbonat zu optimieren.

Das Druck- und Lösegefäss (Autoklav) 4 besteht in der Regel aus Edelstahl und ist innen zumindest an den Teilen, die mit dem Lösungsmittel Salpetersäure in Berührung kommen, günstigerweise mit Tantal überzogen. Statt mit Tantal kann das Druck- und Lösegefäss innen auch in vorteilhafter Weise mit Gold, Platin oder Polytetrafluoräthylen überzogen sein, so dass der Edelstahl, der bei erhöhter Temperatur eine hohe Korrosionsrate in Salpetersäure hat, durch diese nicht angegriffen wird. Das Druck- und Lösegefäss kann auch selbst aus Tantal, Gold, Platin oder Polytetrafluoräthylen bestehen.

In einer Einrichtung nach Fig. 3 kann auch in vorteilhafter Weise Plutoniumdioxid aus bestrahltem Kernbrennstoff abgebrannter Kernreaktorbrennelemente mit dem erfindungsgemässen Verfahren herausgelöst werden. Zu diesem Zweck kann z.B. der Vorlagebehälter 2 mit pulverförmigem bestrahltem Kernbrennstoff anstatt mit pulverförmigem $PuO_2$ gefüllt werden.

## Patentansprüche

1. Verfahren zum Auflösen schwerlöslicher Plutoniumoxide, insbesondere $PuO_2$ oder $(U/Pu)$-$O_2$-Mischoxide, dadurch gekennzeichnet, dass die Oxide innerhalb eines gasdicht verschlossenen Gefässes (Autoklaven) in fluoridfreier Salpetersäure ($HNO_3$) erhitzt werden.

2. Verfahren nach Anspruch 1, dadurch gekennzeichnet, dass die Oxide in konzentrierter Salpetersäure erhitzt werden.

3. Verfahren nach Anspruch 1, dadurch gekennzeichnet, dass die Oxide und die Salpetersäure auf eine Temperatur erhitzt werden, die gleich ist wie oder höher als die Siedetemperatur von der Salpetersäure bei Normaldruck (Atmosphärendruck).

4. Verfahren nach Anspruch 3, dadurch gekennzeichnet, dass die Oxide und die Salpetersäure auf mindestens 120°C erhitzt werden.

5. Verfahren nach Anspruch 4, dadurch gekennzeichnet, dass die Oxide und die Salpetersäure auf eine Temperatur im Bereich von 120°C bis 300°C erhitzt werden.

6. Verfahren nach Anspruch 5, dadurch gekennzeichnet, dass die Oxide und die Salpetersäure auf eine Temperatur im Bereich von 200°C bis 300°C erhitzt werden.

7. Verfahren nach Anspruch 1, dadurch gekennzeichnet, dass die Oxide und die Salpetersäure im gasdicht verschlossenen Gefäss in einer Gasatmosphäre erhitzt werden, die mehr Sauerstoff und/oder Ozon enthält als die atmosphärische Luft.

8. Verfahren nach Anspruch 1, dadurch gekennzeichnet, dass die Oxide und die Salpetersäure im gasdicht verschlossenen Gefäss in einer Gasatmosphäre erhitzt werden, die aus reinem Sauerstoff und/oder Ozon besteht.

9. Verfahren nach Anspruch 7 oder 8, dadurch gekennzeichnet, dass der Druck des Sauerstoffes und/oder des Ozons im gasdicht verschlossenen Gefäss höher ist als der Normaldruck (Atmosphärendruck).

10. Verfahren nach Anspruch 1, dadurch gekennzeichnet, dass für Salpetersäure mit den Oxiden ein Gefäss verwendet wird, das aus einem gegen Salpetersäure korrosionsbeständigen Werkstoff besteht oder das innen mit einem gegen Salpetersäure korrosionsbeständigen Werkstoff überzogen ist.

11. Verfahren nach Anspruch 10, dadurch gekennzeichnet, dass ein Gefäss verwendet wird, das aus Tantal, Gold, Platin oder Polytetrafluoräthylen besteht oder das innen mit Tantal, Gold, Platin und/oder Polytetrafluoräthylen überzogen ist.

## Claims

1. A process for dissolving difficultly soluble plutonium oxides, in particular $PuO_2$ or $(U/Pu)-O_2$-mixed oxides, characterised in that the oxides are heated in fluoride-free nitric acid ($HNO_3$) within a gas-tight closed vessel (autoclave).

2. A process according to claim 1, characterised in that the oxides are heated in concentrated nitric acid.

3. A process according to claim 1, characterised in that the oxides and the nitric acid are heated to a temperature which is the same as or higher than the boiling point of nitric acid at normal pressure (atmospheric pressure).

4. A process according to claim 3, characterised in that the oxides and the nitric acid are heated to at least 120°C.

5. A process according to claim 4, characterised in that the oxides and the nitric acid are heated to a temperature in the range of 120°C to 300°C.

6. A process according to claim 5, characterised in that the oxides and the nitric acid are heated to a temperature in the range of 200°C to 300°C.

7. A process according to claim 1, characterised in that the oxides and the nitric acid are heated in the gas-tight closed vessel in a gas atmosphere which contains more oxygen and/or ozone than atmospheric air.

8. A process according to claim 1, characterised in that the oxides and the nitric acid are heated in the gas-tight closed vessel in a gas atmosphere which consists of pure oxygen and/or ozone.

9. A process according to claim 7 or claim 8, characterised in that the pressure of the oxygen and/or ozone in the gas-tight closed vessel is higher than the normal pressure (atmospheric pressure).

10. A process according to claim 1, characterised in that for nitric acid with the oxides, a vessel is used which is made of a material which is resistant to corrosion by nitric acid, or which is coated on the inside with a material which is resistant to corrosion by nitric acid.

11. A process according to claim 10, characterised in that a vessel is used which is made of tantalum, gold, platinum or polytetrafluoroethyle, or which is coated on the inside with tantalum, gold, platinum and/or polytetrafluoroethylene.

## Revendications

1. Procédé de dissolution d'oxydes de plutonium difficilement solubles, notamment de $PuO_2$ ou d'oxydes mixtes $(U/Pu)-O_2-$, caractérisé en ce qu'il consiste à chauffer les oxydes dans un récipient fermé d'une manière étanche aux gaz (autoclave) dans de l'acide nitrique ($HNO_3$) exempt de fluorures.

2. Procédé suivant la revendication 1, caractérisé en ce qu'il consiste à chauffer les oxydes dans de l'acide nitrique concentré.

3. Procédé suivant la revendication 1, caractérisé en ce qu'il consiste à chauffer les oxydes et l'acide nitrique à une température qui est égale ou qui est supérieure au point d'ébullition de l'acide nitrique sous la pression normale (pression atmosphérique).

4. Procédé suivant la revendication 3, caractérisé en ce qu'il consiste à chauffer les oxydes et l'acide nitrique à au moins 120°C.

5. Procédé suivant la revendication 4, caractérisé en ce qu'il consiste à chauffer les oxydes et l'acide nitrique à une température comprise dans la gamme allant de 120°C à 300°C.

6. Procédé suivant la revendication 5, caractérisé en ce qu'il consiste à chauffer les oxydes et l'acide nitrique à une température comprise dans la gamme allant de 200°C à 300°C.

7. Procédé suivant la revendication 1, caractérisé en ce qu'il consiste à chauffer les oxydes et l'acide nitrique dans un récipient fermé de manière étanche aux gaz dans une atmosphère gazeuse, qui contient plus d'oxygène et/ou d'ozone que l'air atmosphérique.

8. Procédé suivant la revendication 1, caractérisé en ce qu'il consiste à chauffer les oxydes et l'acide nitrique dans un récipient fermé de manière étanche aux gaz dans une atmosphère gazeuse qui est constituée d'oxygène et/ou d'ozone pur.

**0 049 827**

9. Procédé suivant la revendication 7 ou 8, caractérisé en ce que la pression de l'oxygène et/ou de l'ozone dans le récipient fermé de manière étanche aux gaz est supérieure à la pression normale (pression atmosphérique).

10. Procédé suivant la revendication 1, caractérisé en ce qu'il consiste à utiliser, pour l'acide nitrique avec ses oxydes, un récipient qui est en un matériau résistant à la corrosion par l'acide nitrique, ou qui est revêtu intérieurement d'un matériau résistant à la corrosion par l'acide nitrique.

11. Procédé suivant la revendication 10, caractérisé en ce qu'il consiste à utiliser un récipient qui est en tantale, en or, en platine ou en polytétrafluoroéthylène et qui est revêtu intérieurement de tantale, d'or, de platine et/ou de polytétrafluoroéthylène.

FIG 1

FIG 2